# EUROPEAN PATENT APPLICATION

(11) **EP 1 156 688 A2**
(43) Date of publication of application: **21.11.2001**
(21) Application number: 01112281.9
(22) Date of filing: 18.05.2001
(51) Int. Cl.: H04Q 7/30

(54) **Transmission line sharing method and system for service networks different from each other in network system**

(30) Priority: 19.05.2000 JP 2000148520
(71) Applicant: NEC CORPORATION, Tokyo (JP)
(72) Inventor: Shionozaki, Atsushi, Tokyo (JP)
(74) Representative: Betten & Resch

(57) **Abstract**

A base station for a first service network and a base station for a second service network are provided within a station building, and are connected to common transmission path and transmitter through a line concentrator. A base station control unit for the first service network and a base station control unit for the second service network are provided within another station building. The base station control units are connected to each other through a single line multiplexer/demultiplexer and an STM line terminating set and an STM line terminating set, and a transmitter is connected to the line multiplexer/demultiplexer through an STM line terminating set. This construction can realize transmission line sharing method and system for service networks different from each other in a system, wherein the cost at the time of the provision of a new service can be reduced through sharing of the transmission system.

## Description

### FIELD OF THE INVENTION

The invention relates to transmission line sharing method and system for service networks different from each other in a network system, which can provide services from a plurality of base station control units through an identical transmission path and an identical transmitter respectively to base stations in service networks different from each other in a network system.

### BACKGROUND OF THE INVENTION

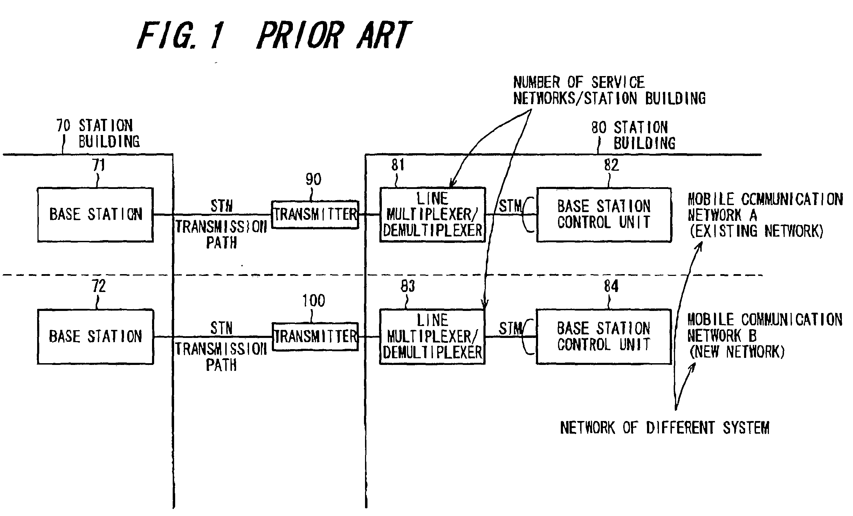

Fig. 1 is a diagram showing the construction of a conventional station building in a transmission system for providing services in a mobile communication network.

A conventional station building for a mobile communication network comprises: a station building 70 on a base station side for housing a base station 71 for a mobile communication network A; and a station building 80 for providing services to the mobile communication network A in the base station 71. The station building 80 houses therein a line multiplexer/demultiplexer 81 and a base station control unit 82 of STM (synchronous transfer mode). Specialty STM transmission path and transmitter 90 are disposed between the base station 71 in the station building 70 and the line multiplexer/demultiplexer 81 in the station building 80 to constitute a service network. That is, the construction of a system is adopted such that a service is provided from the base station control unit to the base station through specialty line multiplexer/demultiplexer, transmission path, and transmitter.

For this reason, in the conventional system construction, when a service of a new system in a new network as a mobile communication network B is provided, a service network has been constructed such that new transmission path and transmitter 100 are provided and, in addition, a base station 72 is provided within the station building 70 while a line multiplexer/demultiplexer 83 and a base station control unit 84 are disposed within the station building 80 to provide a service different from the service provided by the network A.

According to the conventional system construction, when a service carrier newly provides a service of a new system, an infrastructure, which is newly provided with a line multiplexer/demultiplexer, a transmission path, and a transmitter, should have been constructed for each system.

In the above conventional system construction, at the time of the provision of a new service, the whole system should be constructed. This leads to a difficulty of funds and, in addition, leads to a steep rise in an initial service charge which is causative of a decrease in an increase rate of the number of subscribers. This further leads to a delay of the recovery of an investment in equipment by the service carrier.

### SUMMARY OF THE INVENTION

Accordingly, it is an object of the invention to provide transmission line sharing method and system for service networks different from each other in a network system, wherein the cost at the time of the provision of a new service can be reduced through sharing of the transmission system.

According to the first feature of the invention, there is provided a transmission line sharing method for service networks different from each other in a network system in which services are provided from base station control units to base stations in service networks different from each other in a network system, wherein
services are provided from a plurality of base station control units through a line multiplexer/demultiplexer respectively to base stations in a plurality of service networks different from each other in a network system, thereby permitting a transmission path and a transmitter common to the service networks different from each other in a network system to be used.

Preferably, the base station control units include an STM system and an ATM system and the line multiplexer/demultiplexer terminates and accommodates a line of an ATM system as an STM system.

In the transmission line sharing method for service networks different from each other in a network system according to the first feature of the invention, the service networks different from each other in a network system may include a PDC system and an IMT-2000 system.

According to the second feature of the invention, there is provided a transmission line sharing system for service networks different from each other in a network system in which services are provided from base station control units to base stations in service networks different from each other in a network system, said transmission line sharing system comprising:
a plurality of base stations for respective different service networks;
a plurality of base station control units respectively for providing services to the plurality of base stations;
a transmission path and a transmitter common to the service network between one of the base stations and one of the base station control units and the service network between another base station and another base station control unit; and
a line multiplexer/demultiplexer for connecting the plurality of base station control units to the transmitter.

In the transmission line sharing system for service networks different from each other in a network system according to the second feature of the invention, the base station control units may include a base station control unit of an STM system and a base station control unit of an ATM system and an ATM-STM line terminating set for terminating the ATM system as the STM system is provided between the line multiplexer/demultiplexer and the base station control unit of the ATM system.

In the transmission line sharing system tor service networks different from each other in a network system according to the second feature of the invention, the service networks different from each other in a system may include a PDC system and an IMT-2000 system.

In the connection between the base stations and the base station control units regarding service networks different from each other in a network system, the utilization of an existing line multiplexing/demultiplxing section can realize sharing of a transmission path and a transmitter. The accommodation of base station control units of an STM system, an ATM system and the like in the line multiplexer/demultiplexer is carried out respectively through an STM line terminating set, an ATM-STM line terminating set and other interfaces.

### BRIEF DESCRIPTION OF THE DRAWINGS

The invention will be explained in more detail in conjunction with the appended drawings, wherein:
FIG. 1 is a diagram showing the construction of a conventional transmission system;
Fig. 2 is a diagram showing the fundamental construction of transmission line sharing method and system for service networks different from each other in a network system according to the invention; and
Fig. 3 is a diagram showing a preferred embodiment of the transmission line sharing method and system for service networks different from each other in a network system according to the invention.

### DESCRIPTION OF THE PREFERRED EMBODIMENTS

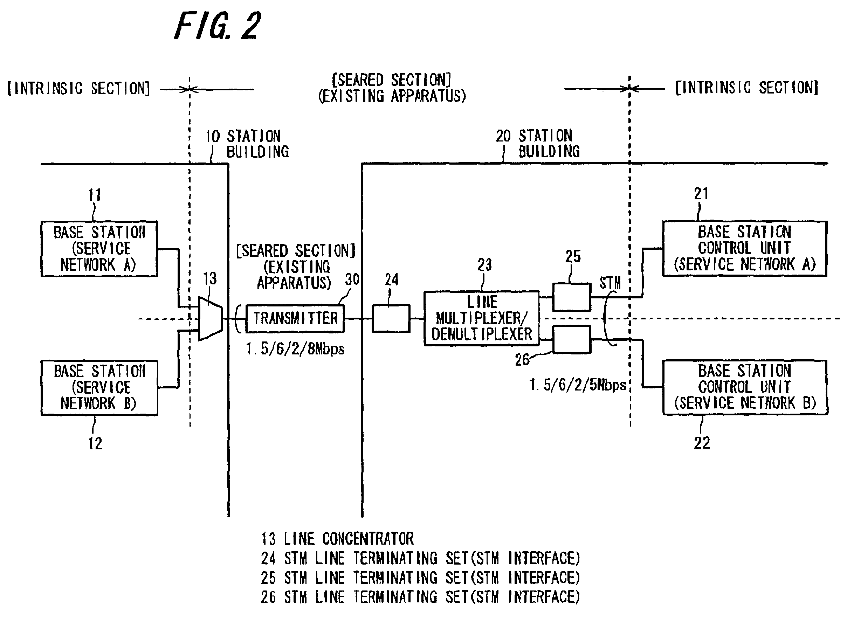

Fig. 2 is a diagram showing the construction of a preferred embodiment of the transmission line sharing method and system for service networks different from each other in a network system according to the invention. The construction shown in Fig. 2 comprises a station building 10 on a base station side, a station building 20 on a base station control unit side, and a transmission path and a transmitter 30 common to both the station buildings,

Further, a base station 11 for a service network A and a base station 12 for a service network B are provided in the station building 10, and the base stations 11, 12 are connected to the transmission path and the transmitter 30 through a line concentrator 13. A base station control unit 21 for the service network A and a base station control unit 22 for the service network B are provided within the station building 20. The base station control units 21, 22 are connected to each other through a single line multiplexer/demultiplexer 23 and an STM line terminating set 25 and an STM line terminating set 26, and the transmitter 30 is connected to the line multiplexer/demultiplexer 23 through an STM line terminating set 24.

The base stations 11, 12 and the base station control units 21, 22 constitute an intrinsic section inherent in the service networke. The transmission path and the transmitter 30, the line multiplexer/demultiplexer 23, and the line terminating sets 24, 25, 26 constitute a shared section, such as an existing transmission path, relative to the intrinsic sections.

According to this preferred embodiment, a construction is adopted such that the base stations 11, 12 in the station building 10 are connected to the base station control units 21, 22 in the station building 20 through the line multiplexer/demultiplexer 23 and the transmission path and the transmitter 30, and a transmission system is shared by an STM (synchronous transfer mode) system. By virtue of this construction, even when the service network B is a system for providing a new service of a transmission system different from the service network A, the existing transmission system can be shared as much as possible. Therefore, the cost in the construction of a new service can be reduced.

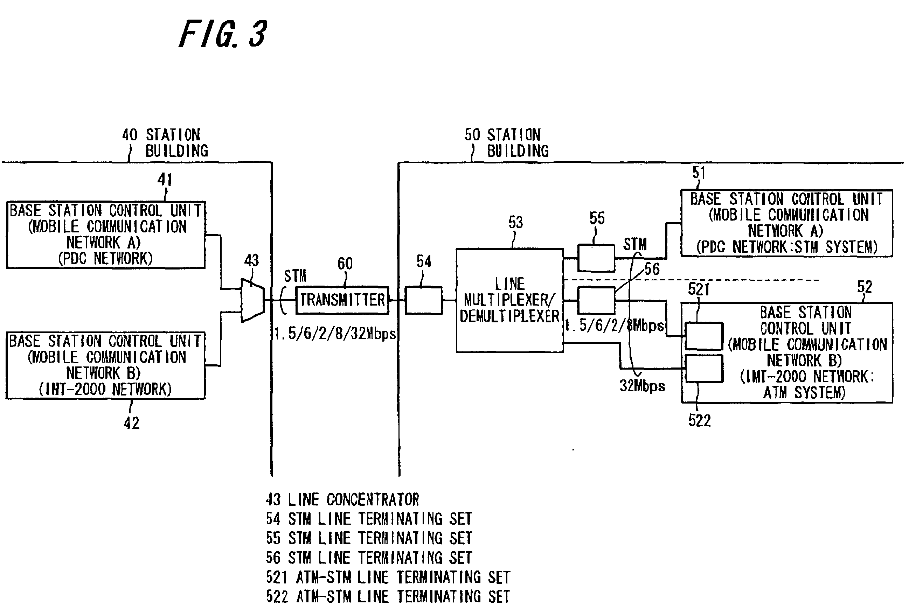

Fig. 3 is a diagram showing a more detailed construction of the present preferred embodiment. The construction according to this embodiment comprises a station building 40 on a base station side, a station building 50 on a base station control unit side, and a transmission path and a transmitter 60 provided between both the station buildings.

A base station 41 for a PDC (personal digital cellular, RCR STD-27) network and a base station 42 for an IMT-2000 (international mobile telecommunication 2000) network are provided within the station building 40, and are connected to an STM transmission path and a transmitter 60 through a line concentrator 43. On the other hand, a base station control unit 51 for a mobile communication network A of a PDC network of an STM (synchronous transfer mode) system and a base station control unit 52 for a mobile communication network B of an IMT-2000 network of an ATM (asynchronous transfer mode) system are provided within the station building 50.

The base station control unit in the mobile communication network A is connected to a line multiplexer/demultiplexer 53 through an STM line terminating set 55. The base station control unit in the mobile communication network B has ATM-STM line terminating sets 521, 522 for terminating ATM as STM. The ATM-STM line terminating set 521 is connected to the line multiplexer/demultiplexer 53 through an STM line terminating set 56, and the ATM-STM line terminating set 522 is connected directly to the line multiplexer/demultiplexer 53. Further, the tranamitter 60 is connected to the line multiplexer/demultiplexer 53 through an STM line terminating set 54.

The function and operation of the preferred embodiment of the invention shown in Fig. 3 will be explained.
1. The mobile communication network A of PDC is in such a state that the base station 41 is interfaced with the base station control unit 51 by an STM system through the existing transmission path and the transmitter 60.
2. It will be assumed chat, in order to newly provide a service of a mobile communication network B of IMT-2000. a base station 42 for the network B is newly provided within the same station building 40 (that is, when the network A and the network B are provided within the station building on the base station side) .
3. The tranemiesion path, the transmitter and the like are not provided in each of the mobile communication network A and the mobile communication network B, and, in the station building 50, the base station control unit 52 for the mobile communication network B is led in the line multiplexer/demultiplexer which is connected to the base station control unit 51 for the mobile communication network A and has the function of line mulitplexing/demultiplexing.
4. The lines of a plurality of service networks are multiplexed/demultiplexed by the line multiplexer/demultiplexer 53 for each leading path. That is, ATM-STM line terminating sets 521, 522 are provided in the mobile communication network B, and. for example, lines are multiplexed/demultiplexed by the line multiplexer/demultiplexer 53 for each leading path at respective transmission speeds of 1.5/6/2/8 Mbps and 32 Mbps.
5. In the base station, a signal of an STM system is received at a transmission speed of 1.5/6/2/8/32 Mbps through the line concentrator 43 in the base station housing, and a service to be utilized is selected.
6. An STM line terminating set conforming to standards of transmission path between the base station and the base station control unit is used in the line multiplexer/demultiplexer 53 necessary for the newly provided mobile communication network B. If the interface is not suitable for the STM system, a converter is used.
7. Thus, the mobile communication network A is shared with the mobile communication network B in transmission path, and a plurality of services from the station building 50 can be provided to the station building 40 on the base station side.

As is apparent from the foregoing description, according to the invention, the adoption of a construction, such that a newly provided network is led in a line multiplexer/demultiplexer, can realize sharing of a transmission path and a transmitter. This can eliminate the need to provide the transmission path and the transmitter for each network and each line and thus renders extra investment in equipment unnecessary.

Further, mere utilization of the STM interface function can realize the provision of a new service while remaining the existing mobile communication network unchanged. This can reduce development cost.

Furthermore, in providing a new service Of a different system, the service carrier does not need any special change in system construction. Therefore, a shift to the new service can be smoothly realized. This permits small-scale telecommunication carriers, which do not have basic facilities such as transmission paths, to easily enter services. In addition, the telecommunication carrier can easily provide a plurality of services.

The invention has been described in detail with particular reference to preferred embodiments, but it will be understood that variations and modifications can be effected within the scope of the invention as set forth in the appended claims.

## Claims

1. A transmission line sharing method for service networks different from each other in a network system in which services are provided from base station control units to base stations in service networks different from each other in a network system, wherein
services are provided from a plurality of base station control units through a line multiplexer/demultiplexer respectively to base stations in a plurality of service networks different from each other in a network system, thereby permitting a transmission path and a transmitter common to the service networks different from each other in a network system to be used.

2. The transmission line sharing method for service networks different from each other in a network system according to claim 1, wherein the base station control units include an STM system and an ATM system and the line multiplexer/demultiplexer terminates and accommodates a line of an ATM system as an STM system.

3. The transmission line sharing method for service networks different from each other in a network system according to claim 1 or 2, wherein the service networks different from each other in a network system include a PDC system and an IMT-2000 system.

4. A transmission line sharing system for service networks different from each other in a network system in which services are provided from base station control units to base stations in service networks different from each other in a network system, said transmission line sharing system comprising:
a plurality of base stations for respective different service networks;
a plurality of base station control units respectively for providing services to the plurality of base stations;
a transmission path and a transmitter common to the service network between one of the base stations and one of the base station control units and the service network between another base station and another base station control unit; and
a line multiplexer/demultiplexer for connecting the plurality of base station control units to the transmitter.

5. The transmission line sharing system for service networks different from each other in a network system according to claim 4, wherein the base station control units include a base station control unit of an STM system and a base station control unit of an ATM system and an ATM-STM line terminating set for terminating the ATM system as the STM system is provided between the line multiplexer/demultiplexer and the base station control unit of the ATM system.

6. The transmission line sharing system for service networks different from each other in a network system according to claim 4 or 5, wherein the service networks different from each other in a system include a PDC system and an IMT-2000 system.
